# EUROPÄISCHE PATENTSCHRIFT

(11) **EP 2 494 895 B1**
(45) Veröffentlichungstag und Bekanntmachung des Hinweises auf die Patenterteilung: **02.10.2013**
(21) Anmeldenummer: 11157032.1
(22) Anmeldetag: 04.03.2011
(51) Int. Cl.: A47J 31/46, A47J 31/56

(54) **Verfahren zur Ausgabe von Getränken aus einem Getränkeautomat**
Method for discharging drinks from a beverage machine
Procédé de sortie de boissons d'un automate à boissons

(43) Veröffentlichungstag der Anmeldung: 05.09.2012
(73) Patentinhaber: Schaerer AG, 4528 Zuchwil (CH)
(72) Erfinder: Egli, Peter, 3037 Herrenschwanden (CH); Aeberhard, Bruno, 2557 Studen (CH); Zihlmann, Roland, 4800 Zofingen (CH)
(74) Vertreter: Rentsch Partner AG

(56) Entgegenhaltungen:
- EP-A1- 1 882 433
- WO-A2-2006/113075
- US-A1- 2006 005 712

## Beschreibung

Die vorliegende Erfindung bezieht sich auf ein Verfahren zur Ausgabe von Getränken aus einem Getränkeautomat, bei welchem über eine Heisswasserleitung Heisswasser in eine der Getränkezubereitungseinrichtungen und/oder über eine Kaltwasserleitung Kaltwasser in eine der Getränkezubereitungseinrichtungen zugeführt wird, das fertige Getränk zubereitet und über eine Getränkeausgabe einem Getränkebehälter zugeführt wird.

In bekannten Getränkeautomaten können sowohl heisse als auch kalte Getränke bezogen werden. Beim Bezug von kalten Getränken wird eine festgelegte Menge Kaltwasser über Leitungen einer ausgewählten Getränkezubereitungseinrichtung zugeführt, in welcher dem Kaltwasser beispielsweise ein oder mehrere Getränkepulver oder ein Sirup beigemischt wird. Das gemischte fertiggestellte Getränk gelangt über eine Getränkeausgabe in einen Getränkebehälter. Hierbei kann das Kaltwasser vom Getränkeautomaten direkt vom Wasserleitungsnetz bezogen werden, es kann aber auch aus einem Kaltwasserbehälter, der in den Getränkeautomaten eingesetzt ist und der manuell oder über das Leitungsnetz gefüllt werden kann, bezogen werden.

Für die Ausgabe von heissen Getränken wird der gewünschten Getränkezubereitungseinrichtung eine festgelegte Heisswassermenge zugeführt. Diese Heisswassermenge stammt in bekannter Weise aus einem im Getränkeautomaten angeordneten Boiler. In diesem Boiler wird das zugeleitete Kaltwasser auf die vorgegebene Temperatur aufgeheizt. In der ausgewählten Getränkezubereitungseinrichtung kann dem Heisswasser wiederum ein oder mehrere Getränkepulver oder ein Konzentrat zugeführt werden. Das fertiggestellte Getränk wird dann in einen Getränkebehälter ausgegeben.

Um zu ermöglichen, dass aus einem derartigen Getränkeautomaten auch Kaffee bezogen werden kann, ist eine der Getränkezubereitungseinrichtungen als Brüheinrichtung ausgebildet, die in bekannter Weise eine zu öffnende und verschliessbare Brühkammer aufweist, welche das gemahlene Kaffeepulver aufnehmen kann und durch welche das Heisswasser zum Brühen von Kaffee geleitet wird. Diesem Kaffee können in bekannter Weise auch noch Milch, Milchschaum oder dergleichen beigefügt werden.

Selbstverständlich können aus einem derartigen Getränkeautomat auch reines kaltes Wasser oder Heisswasser, beispielsweise zum Herstellen von Tee, bezogen werden.

Bei einem derartigen Getränkeautomaten wird im Boiler das Heisswasser auf eine Temperatur aufgeheizt, die erforderlich ist, um das die höchste Temperatur aufweisende Getränk ausgeben zu können. Dies ist üblicherweise der Kaffee, bei welchem das Brühwasser eine Temperatur von etwa 95 Grad Celsius aufweisen soll, um eine optimale Kaffeequalität erreichen zu können.

Beim Bezug von warmen Getränken, die aus diesem Getränkeautomaten bezogen werden, und dem beispielsweise ein Pulver beigemischt wird, ist diese Temperatur zu hoch, die Qualität des ausgegebenen Getränks leidet darunter. Diesem Heisswasser kann Kaltwasser beigemischt werden, um eine reduzierte Temperatur erreichen zu können, was aber nicht die gewünschte Qualitätsverbesserung bringt.

Aus der Druckschrift EP 1 882 433 A1 ist eine Kaffeemaschine bekannt, bei der ein Kaltwasserrohr mit einem ersten Ventil und ein Heisswasserrohr mit einem zweiten Ventil vorgesehen und mit einer Abgabeeinheit verbunden sind, wobei innerhalb der Abgabeeinheit ein Wärmeerzeuger und ein Temperatursensor angeordnet sind, die mit einer Steuerung für die Ventile verbunden sind. Die Ventile werden so angesteuert, dass sie präzise das Verhältnis zwischen Heisswasserstrom und Kaltwasserstrom bestimmen. Massgebend für die Ansteuerung ist das Temperatursignal vom Temperatursensor der Abgabeeinheit. Eine intermittierende Steuerung der Ventile ist nicht offenbart.

Die Druckschrift US 2006/0005712 A1 offenbart einen Getränkeautomaten, bei dem zur Einstellung einer Mischtemperatur zwei separate Ventile für Heisswasser und

Kaltwasser pulsbreitenmoduliert angesteuert werden. Eine intermittierende Steuerung der Ventile ist ebenfalls nicht offenbart.

Dasselbe gilt auch für die Mischbatterie aus der Druckschrift WO 2006/113075 A2.

Die Aufgabe der vorliegenden Erfindung besteht somit darin, ein Verfahren zu schaffen, welches ermöglicht, den einzelnen Getränkezubereitungseinrichtungen Wasser mit der gewünschten Temperatur zuführen zu können, das aus einer Mischung von Heisswasser und Kaltwasser besteht, wobei diese Heiss- und Kaltwassermischung beim Erreichen der entsprechenden Getränkezubereitungseinrichtung gut durchmischt ist, damit keine grossen Temperaturspitzen entstehen.

Erfindungsgemäss erfolgt die Lösung dieser Aufgabe dadurch, dass, wenn die Temperatur T3 der ausfliessenden Gesamtmenge zwischen der Temperatur T1 des Heisswassers und der Temperatur T2 des Kaltwassers liegt, abwechselnd die Heisswassermenge in ersten Zeitintervallen t2 und die Kaltwassermenge in zweiten Zeitintervallen t1 zugeführt werden.

Durch dieses erfindungsgemässe Verfahren kann eine Wassermenge ausgegeben werden, die die gewünschte Temperatur aufweist. Durch Festlegen der Länge der jeweiligen Intervalle, wodurch die Menge des jeweils zugeführten Kaltwassers und Heisswassers bestimmt wird, wird die Temperatur des auszugebenden Wassers festgelegt, durch die Intervallfolge erreicht man eine gute Durchmischung des auszugebenden Wassers, wodurch dieses beim Durchlaufen der jeweiligen Getränkezubereitungseinrichtung praktisch die Mischtemperatur aufweist, die Qualität des herzustellenden Getränks ist dadurch gewährleistet.

In vorteilhafter Weise haben die ersten Zeitintervalle jeweils eine gleiche Länge und haben die zweiten Zeitintervalle jeweils eine gleiche Länge, wodurch die Mengenregulierung vereinfacht wird.

In vorteilhafter Weise werden die Heisswassermenge und die Kaltwassermenge durch einen Verteilblock geführt, werden in diesem gemischt und über einen der Ausgänge in Zuführleitungen in die gewünschte Getränkezubereitungseinrichtung geführt. Dadurch wird erreicht, dass die aus dem Verteilblock austretende Wassermenge eine praktisch konstante Temperatur aufweist.

In vorteilhafter Weise wird das durch die Heisswasserleitung zugführte Heisswasser aus einem Boiler bezogen, welcher über eine weitere Kaltwasserleitung gespiesen und auf die Temperatur T1 aufgeheizt wird, was einen einfachen Aufbau der Einrichtung ermöglicht. Eine weitere vorteilhafte Ausgestaltung des erfindungsgemässen Verfahrens besteht darin, dass die Temperatur T1 des zuzuführenden Heisswassers und die Temperatur T2 des zuzuführenden Kaltwassers gemessen wird, wodurch die Mengenregelung so ausgeführt werden kann, dass die genaue gewünschte Temperatur T3 des Mischwassers erreicht wird.

In vorteilhafter Weise wird die Zuführung des Kaltwassers durch die Kaltwasserleitung über ein 2/2-Wegeventil gesteuert, und wird die Zuführung des Kaltwassers durch die weitere Kaltwasserleitung über ein weiteres 2/2-Wegeventil gesteuert, was einen einfachen Steuerungsvorgang zur Folge hat.

Die Zuführung des Kaltwassers in die Kaltwasserleitung oder in die weitere Kaltwasserleitung kann aber auch über ein 3/2-Wegeventil gesteuert werden, was einen einfacheren Aufbau der Einrichtung ergeben würde.

In vorteilhafter Weise wird das Kaltwasser über mindestens eine Pumpe in die Kaltwasserleitung und/oder in die weitere Kaltwasserleitung eingeführt, die Durchflussmenge des Kaltwassers bleibt dadurch konstant.

Erfindungsgemässe Verfahren werden nachfolgend anhand der beiliegenden Zeichnungen beispielhaft näher erläutert.

Hierbei zeigt
Fig. 1 ein erstes Schaltbild einer Anordnung in einem Getränkeautomaten, mit welchem das erfindungsgemässe Verfahren ausgeführt werden kann;
Fig. 2 ein zweites Schaltbild, gemäss welchem das erfindungsgemässe Verfahren durchführbar ist;
Fig. 3 ein drittes Schaltbild, gemäss welchem das erfindungsgemässe Verfahren ausgeführt werden kann;
Fig. 4 ein viertes Schaltbild, gemäss welchem das erfindungsgemässe Verfahren ausgeführt werden kann; und
Fig. 5 in grafischer Darstellung die Zeitintervalle, während welcher Kaltwasser bzw. Heisswasser zugeführt werden.

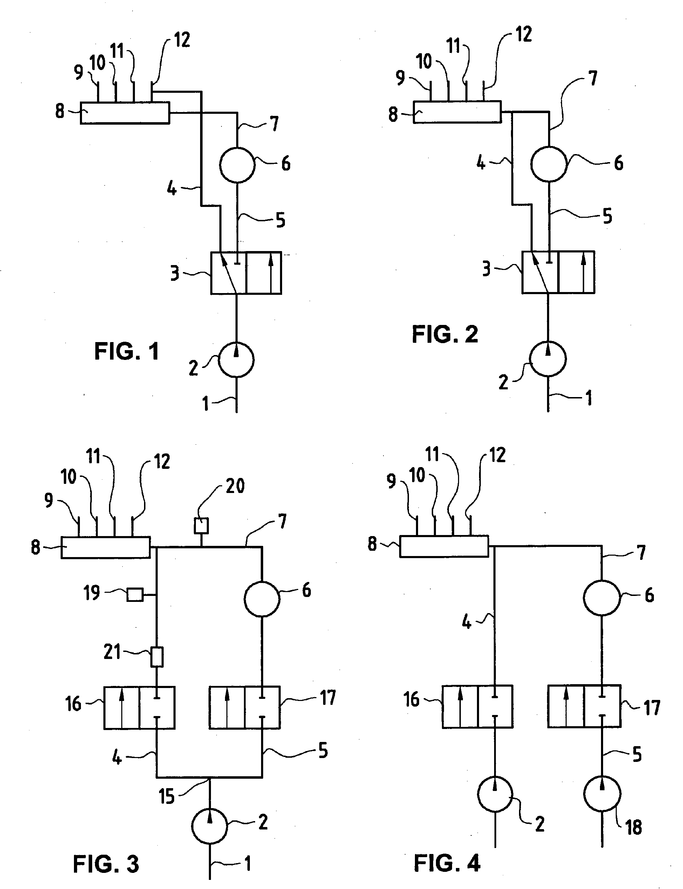

Wie im Schaltschema gemäss Fig. 1 dargestellt ist, erfolgt die Zuführung von Kaltwasser in den nicht dargestellten Getränkeautomat über eine Zuführleitung 1, in welche eine Pumpe 2 eingesetzt ist. Hierbei kann die Zuführleitung 1 direkt mit einem Wasserleitungsnetz verbunden sein, die Zuführleitung kann aber auch mit einem Wasserbehälter verbunden sein, welcher als Reservoir für den Getränkeautomaten dient. Über die Pumpe 2, welche pro Zeiteinheit eine konstante Menge Wasser liefert, gelangt das Kaltwasser über ein 3/2-Wegeventil 3 in eine Kaltwasserleitung 4 oder in eine weitere Kaltwasserleitung 5.

Die weitere Kaltwasserleitung mündet in einem Boiler 6, in welchem das Kaltwasser aufgeheizt wird auf etwa 95° C. Angeschlossen an diesen Boiler 6 ist eine Heisswasserleitung 7, mittels welcher das Heisswasser in einen Verteilblock 8 geleitet wird. Dieser Verteilblock 8 ist mit mehreren Ausgängen 9 bis 12 versehen, jeder dieser Ausgänge 9 bis 12 führt zu einer bekannten, nicht dargestellten Getränkezubereitungseinrichtung.

Die an das Wegeventil 3 angeschlossene Kaltwasserleitung 4 mündet nach dem Verteilblock 8 in den Ausgang 12. Dies bedeutet, dass über den Ausgang 12 bei der entsprechenden Stellung des Wegeventils 3 und bei geöffnetem Ausgang 12 Kaltwasser oder Warmwasser abgeführt werden kann. Die anderen Ausgänge 9, 10 und 11 können nur aus dem Boiler 6 stammendes Heisswasser abgeben, die verschiedenen mit diesen Ausgängen verbundenen Getränkezubereitungseinrichtungen können somit beispielsweise Kaffee, Teewasser oder ein mit einem Pulver verfeinertes heisses Getränk ausgeben.

Wie bereits erwähnt worden ist, kann aus dem Ausgang 12 Kaltwasser oder Heisswasser abgegeben werden. Bei der in Fig. 1 dargestellten Stellung des 3/2-Wegeventils 3 tritt aus dem Ausgang 12 Kaltwasser aus. Wenn das Wegeventil 3 umgestellt wird, tritt aus dem Ausgang 12 oder einem der anderen Ausgänge 9 bis 11 aus dem Boiler 6 stammendes Heisswasser aus. Während des Bezugs eines Getränkes und demzufolge der Zuführung von über die Pumpe 2 gefördertes Kaltwasser kann das 3/2-Wegeventil 3 hin und her geschaltet werden. Dadurch wird dem Ausgang 12 abwechselnd Kaltwasser oder Heisswasser zugeführt, das aus dem Ausgang 12 austretende Wasser hat somit eine Mischtemperatur T3, die zwischen der Temperatur T2, die das Kaltwasser aufweist und der Temperatur T1 liegt, welche das Heisswasser aufweist. Durch entsprechende Ansteuerung des 3/2-Wegeventils 3, was in bekannter Weise über eine nicht dargestellte Steuereinheit des Getränkeautomaten erreicht werden kann, kann eine bestimmte Teilmenge des Kaltwassers und eine bestimmte Teilmenge des Heisswassers dem Ausgang 12 zugeleitet werden, so dass die aus dem Ausgang 12 austretende Wassermenge die gewünschte Temperatur T3 aufweist.

Um zu erreichen, dass das aus dem Ausgang 12 abgegebene Wasser durch die Zuführung von Kaltwasser und Heisswasser nicht zu grosse Temperaturschwankungen aufweist, wird das 3/2-Wegeventil 3 intervallmässig geschaltet. Ein Bezug eines Getränkes und demzufolge beim Betrieb der Pumpe 2 befindet sich das 3/2-Wegeventil 3 während eines ersten Zeitintervalls t1 in der Position, wo kaltes Wasser zugeführt wird, danach wird das 3/2-Wegeventil 3 umgeschaltet, während eines zweiten Zeitintervalls t2 wird dem Ausgang 12 somit Heisswasser zugeführt, danach folgt wiederum die Umschaltung. Hierbei entspricht das Zeitintervall t1 proportional der zuzuführenden Kaltwassermenge, während das Zeitintervall t2 proportional der zuzuführenden Heisswassermenge entspricht.

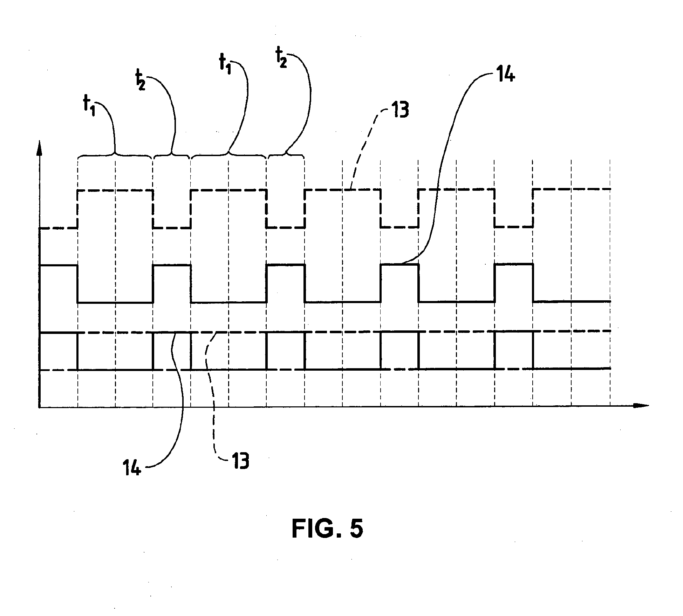

Fig. 5 zeigt in grafischer Darstellung die Schaltung des 3/2-Wegeventil 3. Während dem ersten Zeitintervall t1 wird Kaltwasser zugeführt, dargestellt durch die gestrichelte Linie 13, während dem zweiten Zeitintervall t2 wird Heisswasser zugeführt, dargestellt durch die ausgezogene Linie 14, diese Intervallschaltung erfolgt während des Bezugs eines Getränks und solange die Pumpe 2 in Betrieb ist. In vorteilhafter Weise erfolgt ein derartiger Intervallzyklus etwa 1- bis 2-mal pro Sekunde. Dadurch wird erreicht, dass aus dem Ausgang 3 ein Wasser mit der Temperatur T3 austritt, das gut durchmischt und keine grossen Temperaturspitzen aufweist. Dadurch kann ein optimales Getränk bezogen werden, das eine Temperatur T3 aufweisen kann, die zwischen der Temperatur T2 des Kaltwassers und der Temperatur T1 des Heisswassers liegt.

Wie aus Fig. 2 ersichtlich ist, kann die Kaltwasserleitung 4 und die Heisswasserleitung 7 vor dem Erreichen des Verteilblocks 8 zusammengeführt werden. Dies hat den Vorteil, dass das aus Kaltwasser und Heisswasser gemischte Warmwasser im Verteilblock 8 gut gemischt wird, zudem hat dies auch den Vorteil, dass Warmwasser mit unterschiedlichen Temperaturen aus allen Ausgängen 9 bis 12 des Verteilblocks 8 austreten und in die jeweilige Getränkezubereitungseinrichtung geleitet werden kann, wodurch die Vielfalt der zu beziehenden Getränke erhöht wird. Das Herstellen von Warmwasser erfolgt in gleicher Weise, wie dies zu Fig. 1 beschrieben worden ist.

Fig. 3 zeigt eine Anordnung, bei welcher die Zuführleitung 1 nach der Pumpe 2 eine Verzweigung 15 aufweist, wodurch die Kaltwasserleitung 4 und die weitere Kaltwasserleitung 5 gebildet werden. In die Kaltwasserleitung 4 und die weitere Kaltwasserleitung 5 ist jeweils ein 2/2-Wegeventil 16 bzw. 17 eingesetzt. Die Kaltwasserleitung 4 führt wiederum in den Verteilblock 8, die weitere Kaltwasserleitung 5 mündet wiederum in einen Boiler 6, aus dem eine Heisswasserleitung 7 austritt und ebenfalls in den Verteilblock 8 mündet. Der Verteilblock 8 ist wiederum mit den entsprechenden Ausgängen 9 bis 12 ausgestattet. Zum Zuführen von Kaltwasser in den Verteilblock 8 ist das 2/2-Wegeventil 16 geöffnet, das 2/2-Wegeventil 17 ist geschlossen. Zum Zuführen von Heisswasser in den Verteilblock 8 ist das 2/2-Wegeventil 16 geschlossen, das 2/2-Wegeventil 17 ist geöffnet. Zum Zuführen von Warmwasser in den Verteilblock 8 werden die beiden 2/2-Wegeventile 16 und 17 praktisch parallel miteinander geschaltet, so dass immer eines der beiden Ventile 16 oder 17 offen und das andere geschlossen ist und umgekehrt. Dadurch kann in gleicher Weise Warmwasser bezogen werden, wie das zu Fig. 1 beschrieben worden ist und beispielsweise aus Fig. 5 ersichtlich ist.

Die beiden 2/2-Wegeventile 16 und 17 können so angesteuert werden, dass beim Umschalten während einer geringen Zeitdauer beide Wegeventile 16 und 17 geöffnet sind, dadurch wird die Pumpe 2 geschont, es wirken keine Druckschläge.

Wie aus Fig. 4 ersichtlich ist, können sowohl die Kaltwasserleitung 4 als auch die weitere Kaltwasserleitung 5 mit je einer Pumpe ausgestattet sein, die entsprechenden Kaltwasserleitungen 4 und 5 sind wiederum mit jeweils einem 2/2-Wegeventil 16, 17 ausgestattet.

Wie aus Fig. 3 ersichtlich ist, kann sowohl in der Kaltwasserleitung 4 als auch in der Heisswasserleitung 7 jeweils ein Temperaturfühler 19 bzw. 20 angeordnet sein, mit welchem die jeweilige Temperatur des Kaltwassers bzw. des Heisswassers gemessen und an die Steuereinheit weitergegeben wird, dadurch kann die erforderliche Menge an Kaltwasser und Heisswasser zum Herstellen eines Warmwassers mit der gewünschten Temperatur berechnet und die Intervallschaltung entsprechend ausgeführt werden. Es ist auch denkbar, in die Kaltwasserleitung 4 ein Kühl- und Entkeimungsgerät 21 einzusetzen, um eine optimale Kaltwasserqualität erreichen zu können.

Selbstverständlich können derartige Temperaturfühler und/oder ein Kühl- und Entkeimungsgerät auch in den anderen in Fig. 1, 2 und 4 dargestellten Anordnungen eingesetzt werden.

Selbstverständlich ist es auch denkbar, die Kaltwasserleitung in den Ausführungsformen gemäss Fig. 3 und Fig. 4 direkt in einen der Ausgänge 9 bis 12 zu führen, wie dies zu Fig. 1 beschrieben worden ist.

Mit diesem erfindungsgemässen Verfahren wird es möglich, Wasser in der gewünschten Temperatur einer Getränkezubereitungseinrichtung in einem Getränkeautomaten zuzuführen, die exakt auf das zuzubereitende Getränk abgestimmt ist, wodurch eine optimale Qualität dieses Getränkes erreicht werden kann.

## Patentansprüche

1. Verfahren zur Ausgabe von Getränken aus einem Getränkeautomat, bei welchem über eine Heisswasserleitung (7) Heisswasser in eine der Getränkezubereitungseinrichtungen und über eine Kaltwasserleitung (4) Kaltwasser in eine der Getränkezubereitungseinrichtungen zugeführt wird, das fertige Getränk zubereitet und über eine Getränkeausgabe einem Getränkebehälter zugeführt wird, wobei über die Heisswasserleitung (7) eine Heisswassermenge mit der Temperatur T1 zugeführt wird, und über die Kaltwasserleitung (4) eine Kaltwassermenge mit der Temperatur T2 zugeführt wird, derart dass die ausfliessende Gesamtmenge die gewünschte Temperatur T3 hat, **dadurch gekennzeichnet, dass**, wenn die Temperatur T3 der ausfliessenden Gesamtmenge zwischen der Temperatur T1 des Heisswassers und der Temperatur T2 des Kaltwassers liegt, abwechselnd die Heisswassermenge in ersten Zeitintervallen t2 und die Kaltwassermenge in zweiten Zeitintervallen t1 zugeführt werden.

2. Verfahren nach Anspruch 1, **dadurch gekennzeichnet, dass** die ersten Zeitintervalle t2 jeweils eine gleiche Länge haben und die zweiten Zeitintervalle t1 jeweils eine gleiche Länge haben.

3. Verfahren nach Anspruch 1 oder 2, **dadurch gekennzeichnet, dass** die Heisswassermenge und die Kaltwassermenge durch einen Verteilblock (8) geführt werden, in diesem gemischt und über einen der Ausgänge (9, 10, 11, 12) in Zuführleitungen in die gewünschte Getränkezubereitungseinrichtung geführt werden.

4. Verfahren nach einem der Ansprüche 1 bis 3, **dadurch gekennzeichnet, dass** das durch die Heisswasserleitung (7) zugeführte Heisswasser aus einem Boiler (6) bezogen wird, welcher über eine weitere Kaltwasserleitung (5) gespiesen und auf die Temperatur T1 aufgeheizt wird.

5. Verfahren nach einem der Ansprüche 1 bis 4, **dadurch gekennzeichnet, dass** die Temperatur T1 des zuzuführenden Heisswassers und die Temperatur T2 des zuzuführenden Kaltwassers gemessen werden.

6. Verfahren nach einem der Ansprüche 1 bis 5, dadurch 5 gekennzeichnet, dass die Zuführung des Kaltwassers durch die Kaltwasserleitung (4) über ein 2/2-Wegeventil (16) gesteuert wird.

7. Verfahren nach Anspruch 4, **dadurch gekennzeichnet, dass** die Zuführung des Kaltwassers durch die weitere Kaltwasserleitung (5) über ein weiteres 2/2-Wegeventil (17) gesteuert wird.

8. Verfahren nach Anspruch 4, **dadurch gekennzeichnet, dass** die Zuführung des Kaltwassers in die Kaltwasserleitung (4) oder in die weitere Kaltwasserleitung (5) über ein 3/2-Wegeventil (3) gesteuert wird.

9. Verfahren nach Anspruch 4, **dadurch gekennzeichnet, dass** das Kaltwasser über mindestens eine Pumpe (2, 18) in die Kaltwasserleitung (4) oder in die weitere Kaltwasserleitung (5) eingeführt wird.

## Claims

1. Method for dispensing drinks from a drinks machine, in which hot water is fed into one of the drink preparation devices via a hot-water line (7) and cold water is fed into one of the drink preparation devices via a cold-water line (4), the ready-made drink is prepared and is fed to a drink container via a drink output, wherein a hot-water quantity with a temperature T1 is fed via the hot-water line (7), and a cold-water quantity with a temperature T2 is fed via the cold-water line (4), in such a way that the overall quantity flowing out has the desired temperature T3, **characterized in that**, when the temperature T3 of the overall quantity flowing out lies between the temperature T1 of the hot water and the temperature T2 of the cold water, the hot-water quantity is fed at first time intervals t2 and the cold-water quantity is fed at second time intervals t1.

2. Method according to Claim 1, **characterized in that** the first time intervals t2 have in each case an identical length and the second time intervals t1 have in each case an identical length.

3. Method according to Claim 1 or 2, **characterized in that** the hot-water quantity and the cold-water quantity are routed through a distribution block (8), are mixed in the latter and are routed via one of the outlets (9, 10, 11, 12) in feedlines into the desired drink preparation device.

4. Method according to one of Claims 1 to 3, **characterized in that** the hot water fed by the hot-water line (7) is obtained from a boiler (6) which is fed via a further cold-water line (5) and is heated to the temperature T1.

5. Method according to one of Claims 1 to 4, **characterized in that** the temperature T1 of the hot water to be fed and the temperature T2 of the cold water to be fed are measured.

6. Method according to one of Claims 1 to 5, **characterized in that** the feed of the cold water through the cold-water line (4) is controlled via a 2/2-way valve (16).

7. Method according to Claim 4, **characterized in that** the feed of the cold water through the further cold-water line (5) is controlled via a further 2/2-way valve (17).

8. Method according to Claim 4, **characterized in that** the feed of the cold water into the cold-water line (4) or into the further cold-water line (5) is controlled via a 3/2-way valve (3).

9. Method according to Claim 4, **characterized in that** the cold water is introduced into the cold-water line (4) or into the further cold-water line (5) via at least one pump (2, 18).

## Revendications

1. Procédé de distribution de boissons à partir d'un distributeur automatique de boissons, dans lequel de l'eau chaude est amenée dans l'un des dispositifs de préparation de boissons par le biais d'une conduite d'eau chaude (7) et de l'eau froide est amenée dans l'un des dispositifs de préparation de boissons par le biais d'une conduite d'eau froide (4), la boisson finie est préparée et est amenée jusqu'à un récipient pour boisson par le biais d'un dispositif de distribution de boisson, une quantité d'eau chaude à la température T1 étant amenée par le biais de la conduite d'eau chaude (7) et une quantité d'eau froide à la température T2 étant amenée par le biais de la conduite d'eau froide (4), de telle sorte que la quantité totale s'écoulant ait la température souhaitée T3, **caractérisé en ce que** lorsque la température T3 de la quantité totale s'écoulant se situe entre la température T1 de l'eau chaude et la température T2 de l'eau froide, on amène en alternance la quantité d'eau chaude pendant des premiers intervalles de temps t2 et la quantité d'eau froide pendant des deuxièmes intervalles de temps t1.

2. Procédé selon la revendication 1, **caractérisé en ce que** les premiers intervalles de temps t2 ont respectivement une durée identique et les deuxièmes intervalles de temps t1 ont respectivement une durée identique.

3. Procédé selon la revendication 1 ou 2, **caractérisé en ce que** la quantité d'eau chaude et la quantité d'eau froide sont guidées à travers un bloc de distribution (8), y sont mélangées et sont guidées dans le dispositif de préparation de boissons souhaité par le biais de l'une des sorties (9, 10, 11, 12) dans des conduites d'amenée.

4. Procédé selon l'une quelconque des revendications 1 à 3, **caractérisé en ce que** l'eau chaude amenée à travers la conduite d'eau chaude (7) est reçue d'une chaudière (6) qui est alimentée par le biais d'une conduite d'eau froide supplémentaire (5) et chauffée à la température T1.

5. Procédé selon l'une quelconque des revendications 1 à 4, **caractérisé en ce que** la température T1 de l'eau chaude à amener et la température T2 de l'eau froide à amener sont mesurées.

6. Procédé selon l'une quelconque des revendications 1 à 5, **caractérisé en ce que** l'amenée de l'eau froide à travers la conduite d'eau froide (4) est commandée par le biais d'un distributeur 2/2 voies (16).

7. Procédé selon la revendication 4, **caractérisé en ce que** l'amenée de l'eau froide à travers la conduite d'eau froide supplémentaire (5) est commandée par le biais d'un distributeur 2/2 voies supplémentaire (17).

8. Procédé selon la revendication 4, **caractérisé en ce que** l'amenée de l'eau froide dans la conduite d'eau froide (4) ou dans la conduite d'eau froide supplémentaire (5) est commandée par le biais d'un distributeur 3/2 voies (3).

9. Procédé selon la revendication 4, **caractérisé en ce que** l'eau froide est introduite dans la conduite d'eau froide (4) ou dans la conduite d'eau froide supplémentaire (5) par le biais d'au moins une pompe (2, 18).
